# EUROPEAN PATENT APPLICATION

(11) **EP 4 335 935 A1**
(43) Date of publication of application: **13.03.2024**
(21) Application number: 22811424.5
(22) Date of filing: 27.05.2022
(51) Int. Cl.: C21D 8/12, C21D 9/46, C22C 38/00, C22C 38/60, H01F 1/147, C23C 22/00

(54) **METHOD FOR PRODUCING GRAIN-ORIENTED ELECTROMAGNETIC STEEL SHEET**

(30) Priority: 28.05.2021 JP 2021090682
(71) Applicant: JFE Steel Corporation, Tokyo 100-0011 (JP)
(72) Inventor: IMAMURA, Takeshi, Tokyo 100-0011 (JP); TAKENAKA, Masanori, Tokyo 100-0011 (JP); SUZUKI, Takafumi, Tokyo 100-0011 (JP)
(74) Representative: Hoffmann Eitle
(86) International application number: PCT/JP2022/021829
(87) International publication number: WO 2022/250156

(57) **Abstract**

Provided is a method of manufacturing a grain-oriented electrical steel sheet with which a grain-oriented electrical steel sheet with excellent film adhesion can be obtained. The method of manufacturing a grain-oriented electrical steel sheet includes subjecting a steel slab for grain-oriented electrical steel sheet to hot rolling to obtain a hot-rolled steel sheet, subjecting the hot-rolled steel sheet to cold rolling once, or twice or more with intermediate annealing performed therebetween, to obtain a cold-rolled steel sheet, subjecting the cold-rolled steel sheet to pickling, subjecting the cold-rolled steel sheet to decarburization annealing, applying an annealing separator containing MgO to a surface of the cold-rolled steel sheet after the decarburization annealing, and subjecting the cold-rolled steel sheet applied with the annealing separator to final annealing, where in the pickling, a solution with an acid concentration of 1.0 mass% or more and 20 mass% or less and an Fe ion concentration of 2 mass% or more and 15 mass% or less is used, and in the decarburization annealing, a concentration of CO inevitably mixed in an atmosphere gas is maintained at 6 vol% or less.

## Description

### TECHNICAL FIELD

This disclosure relates to a method of manufacturing a grain-oriented electrical steel sheet.

### BACKGROUND

An electrical steel sheet is a material widely used as an iron core of a transformer, a motor, and the like. Electrical steel sheets are broadly classified into grain-oriented electrical steel sheets and non-oriented electrical steel sheets. A grain-oriented electrical steel sheet is characterized by having a texture in which <001> orientation, which is the easy magnetization axis of iron, is highly accorded with the rolling direction of the steel sheet.

Such a texture is formed by secondary recrystallization in final annealing. As used herein, the secondary recrystallization refers to a phenomenon in which crystal grains with {110}<001> orientation, which is called Goss orientation, preferentially grow into large grains by utilizing grain boundary energy.

A typical technique for causing the secondary recrystallization is to use precipitates called inhibitors. For example, JP S40-15644 B (PTL 1) describes a method of using AlN and MnS, and JP S51-13469 B (PTL 2) describes a method of using MnS and MnSe, as techniques of using inhibitors, and both methods have been put into practical use industrially.

The method of using inhibitors has been widely used in the manufacture of grain-oriented electrical steel sheets because the method can stably develop secondary recrystallized grains. However, to finely disperse the inhibitors in the steel, it is necessary to heat a steel slab in advance to a high temperature of 1300 °C or higher to dissolve the inhibitor components once.

Therefore, a method of manufacturing a grain-oriented electrical steel sheet without using inhibitors (inhibitor-less method) has been proposed (for example, see JP 2000-129356 A (PTL 3)).

The inhibitor-less method is a technique that uses highly purified steel and controls the texture to cause secondary recrystallization. Specifically, this technique elicits the dependency of grain boundary energy of primary recrystallized grains on the grain boundary misorientation angle, to cause the secondary recrystallization of crystal grains with Goss orientation without using inhibitors. This effect is called a texture inhibition effect.

The inhibitor-less method does not require to finely disperse the inhibitors in the steel, thus eliminating the need for high-temperature slab heating, which is essential when using inhibitors. Therefore, the inhibitor-less method has significant advantages not only in terms of manufacturing cost but also in terms of maintenance of manufacturing equipment.

### CITATION LIST

### Patent Literature

PTL 1: JP S40-15644 B
PTL 2: JP S51-13469 B
PTL 3: JP 2000-129356 A

### SUMMARY

### (Technical Problem)

However, it was found that sufficient film adhesion may not be obtained under conventional general manufacturing conditions, regardless of whether or not inhibitors are used.

In the manufacture of a grain-oriented electrical steel sheet, an annealing separator containing MgO is generally applied to the surface of a cold-rolled steel sheet after decarburization annealing, and then the cold-rolled steel sheet is subjected to final annealing. This forms a forsterite film on the surface of the steel sheet. When a grain-oriented electrical steel sheet is used to manufacture an iron core for a transformer or the like, the insulation properties cannot be ensured if the forsterite film peels off. Therefore, a grain-oriented electrical steel sheet is required to have excellent film adhesion.

It could thus be helpful to provide a method of manufacturing a grain-oriented electrical steel sheet with which a grain-oriented electrical steel sheet with excellent film adhesion can be obtained.

### (Solution to Problem)

We have conducted studies to solve the above problem and discovered that excellent film adhesion can be obtained by performing pickling and decarburization annealing under specific conditions. The following describes three experiments that led to this discovery.

In the present specification, "%" of acid concentration and Fe ion concentration represents "mass%", and "%" of CO concentration in the atmosphere represents "vol%".

### <Experiment 1>

A steel slab for grain-oriented electrical steel sheet containing, in mass%, 0.048 % of C, 3.44 % of Si, and 0.10 % of Mn was heated to 1400 °C and subjected to hot rolling to obtain a hot-rolled steel sheet with a thickness of 3.0 mm. After subjecting the hot-rolled steel sheet to hot-rolled sheet annealing at 950 °C for 40 seconds, pickling was performed to remove scale on the steel sheet surface.

Next, the hot-rolled steel sheet after the pickling was subjected to first cold rolling to obtain a thickness of 0.7 mm, and it was subjected to intermediate annealing at 1050 °C for 100 seconds and then to second cold rolling to obtain a cold-rolled steel sheet with a thickness of 0.23 mm. The cold-rolled steel sheet was subjected to pickling in a hydrochloric acid solution containing Fe ions at various concentrations, with the temperature being 50 °C and the acid concentration being 5 %. The acid concentration and the Fe ion concentration were measured using an ultrasonic concentration measuring instrument manufactured by Fuji Kogyo.

The Fe ions in the hydrochloric acid solution were added as iron(III) chloride hexahydrate. When the hydrochloric acid solution is used for the pickling, the Fe ion concentration increases because of the elution of iron from the cold-rolled steel sheet. Therefore, the Fe ion concentration in the hydrochloric acid solution was monitored during the pickling using the aforementioned ultrasonic concentration measuring instrument, and an aqueous hydrochloric acid solution was added as necessary to keep the Fe ion concentration constant.

Next, decarburization annealing was performed under conditions of 850 °C × 90 seconds, 50 % H₂ + 50 % N₂, and a dew point of 60 °C. In this case, the CO concentration in the annealing furnace was controlled to be 2 %.

After the decarburization annealing, the surface of the steel sheet was applied with an annealing separator mainly composed of MgO, and the steel sheet was subjected to final annealing at 1180 °C for 15 hours in a H₂ atmosphere. Next, after removing the unreacted annealing separator remaining on the surface of the steel sheet by water washing, a coating solution mainly composed of phosphate was applied, and the steel sheet was subjected to flattening annealing at 850 °C for 50 seconds to bake the coating and flatten the steel sheet.

With the above processes, a grain-oriented electrical steel sheet with a forsterite film on its surface was obtained.

Next, the film adhesion of the obtained grain-oriented electrical steel sheet was evaluated. The film adhesion was evaluated by winding the grain-oriented electrical steel sheet around cylinders of various diameters and determining the minimum diameter at which the film would not peel off. The smaller the minimum diameter is, the better the film adhesion is.

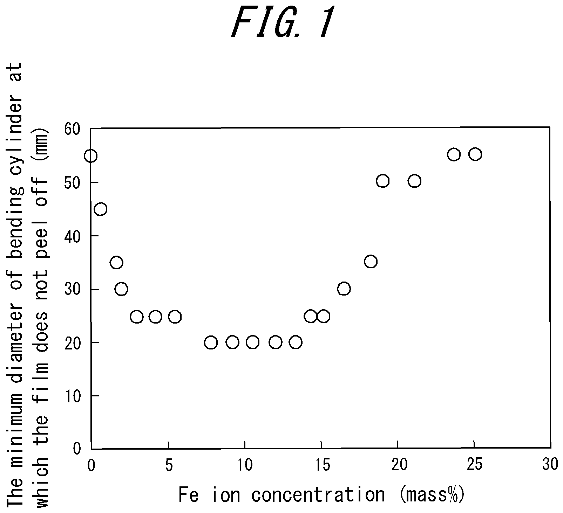

FIG. 1 illustrates the relationship between the Fe ion concentration of the solution used for pickling and the film adhesion. The results indicate that the film adhesion is good when the Fe ion concentrations is 2 % or more and 15 % or less.

### <Experiment 2>

A steel slab for grain-oriented electrical steel sheet containing, in mass%, 0.075 % of C, 2.88 % of Si, 0.05 % of Mn, 0.019 % of Se, and 0.08 % of Sb was heated to 1380 °C and subjected to hot rolling to obtain a hot-rolled steel sheet with a thickness of 2.4 mm. Next, pickling was performed to remove scale on the surface of the hot-rolled steel sheet.

Next, the hot-rolled steel sheet after the pickling was subjected to first cold rolling to obtain a thickness of 0.6 mm, and it was subjected to intermediate annealing at 1100 °C for 100 seconds and then to second cold rolling to obtain a cold-rolled steel sheet with a thickness of 0.23 mm. The cold-rolled steel sheet was subjected to pickling in a hydrochloric acid solution with different acid concentrations, where the temperature was 40 °C and the Fe ion concentration was 6 %. Other conditions for the pickling were the same as in Experiment 1 above.

Next, decarburization annealing was performed under conditions of 850 °C × 180 seconds, 50 % H₂ + 50 % N₂, and a dew point of 62 °C. In this case, the CO concentration in the annealing furnace was controlled to be 1.5 %.

After the decarburization annealing, the surface of the steel sheet was applied with an annealing separator mainly composed of MgO, and the steel sheet was subjected to final annealing at 1200 °C for 10 hours in a H₂ atmosphere. Next, after removing the unreacted annealing separator remaining on the surface of the steel sheet by water washing, a coating solution mainly composed of phosphate was applied, and the steel sheet was subjected to flattening annealing at 850 °C for 20 seconds to bake the coating and flatten the steel sheet.

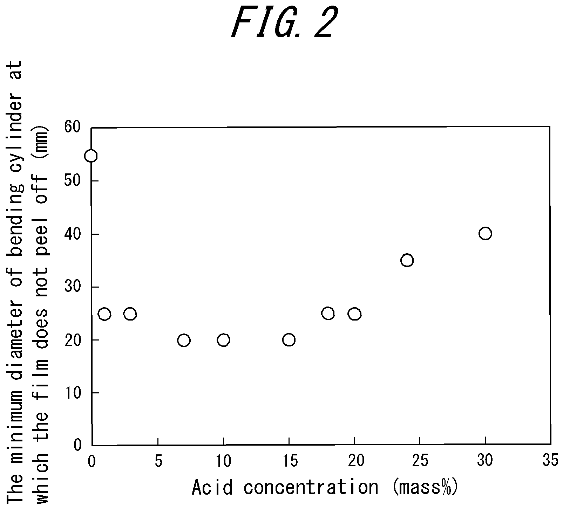

The film adhesion of the obtained grain-oriented electrical steel sheet was evaluated in the same manner as in Experiment 1 above. FIG. 2 illustrates the relationship between the acid concentration and the film adhesion. The results indicate that the film adhesion is good when the acid concentrations is 1.0 % or more and 20 % or less.

### <Experiment 3>

A slab for grain-oriented electrical steel sheet containing, in mass%, 0.082 % of C, 3.51 % of Si, 0.23 % of Mn, 0.029 % of Al, 0.008 % of N, 0.012 % of Se, and 0.004 % of S was heated to 1420 °C and subjected to hot rolling to obtain a hot-rolled steel sheet with a thickness of 2.5 mm. After subjecting the hot-rolled steel sheet to hot-rolled sheet annealing at 950 °C for 30 seconds, pickling was performed to remove scale on the steel sheet surface.

Next, the hot-rolled steel sheet after the pickling was subjected to first cold rolling to obtain a thickness of 1.6 mm, and it was subjected to intermediate annealing at 1025 °C for 150 seconds and then to second cold rolling to obtain a cold-rolled steel sheet with a thickness of 0.23 mm. The cold-rolled steel sheet was subjected to pickling in a hydrochloric acid solution where the temperature was 60 °C, the acid concentration was 5 %, and the Fe ion concentration was 13 %. Other conditions for the pickling were the same as in Experiment 1 above.

Next, decarburization annealing was performed under conditions of 835 °C × 180 seconds, 50 % H₂ + 50 % N₂, and a dew point of 62 °C. At this time, the CO concentration in the annealing furnace was varied.

After the decarburization annealing, the surface of the steel sheet was applied with an annealing separator mainly composed of MgO, and the steel sheet was subjected to final annealing at 1200 °C for 10 hours in a H₂ atmosphere. Next, after removing the unreacted annealing separator remaining on the surface of the steel sheet by water washing, a coating solution mainly composed of phosphate was applied, and the steel sheet was subjected to flattening annealing at 850 °C for 20 seconds to bake the coating and flatten the steel sheet.

The film adhesion of the obtained grain-oriented electrical steel sheet was evaluated in the same manner as in Experiments 1 and 2 above. Further, the C content in steel was measured for the obtained grain-oriented electrical steel sheet. The C content in steel was measured after removing the film on the surface of the grain-oriented electrical steel sheet by pickling with hydrochloric acid of 5 % concentration at 90 °C.

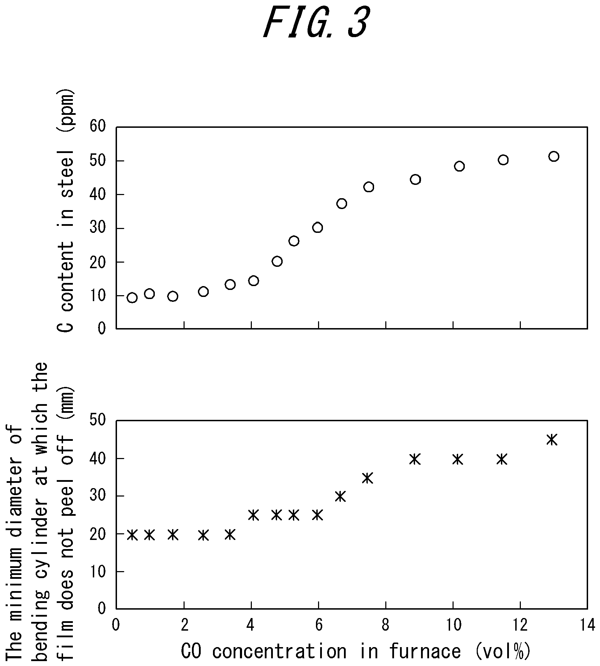

FIG. 3 illustrates the relationship between the CO concentration in the furnace during decarburization annealing, and the film adhesion and the C content in steel. Generally, if the C content in steel of the grain-oriented electrical steel sheet exceeds 35 ppm, the iron loss properties are deteriorated due to magnetic aging. Therefore, a C content in steel of 35 ppm or less is considered acceptable. The results indicate that if the CO concentration in the furnace during decarburization annealing is 6 % or less, the film adhesion is good, and the C content in steel is within the acceptable range of 35 ppm or less.

The above experimental results indicates that, in order to obtain excellent film adhesion, it is necessary to perform pickling treatment before decarburization annealing, during which the Fe ion concentration and the acid concentration need to be controlled within specific ranges. It is also found that, if the CO concentration in the furnace during decarburization annealing is outside a specific range, the film adhesion deteriorates, and the C content in steel increases. Although the reason for the above is not necessarily clear, we consider as follows.

What is important for the film adhesion is the adhesion between steel substrate and a forsterite film formed on its surface. It is said that the attractive interaction between the forsterite film and the steel substrate is small, and the so-called anchoring effect, in which the forsterite film bites into the steel substrate like a wedge, makes a great contribution. In other words, the shape of the forsterite film has a great effect on the film adhesion. A forsterite film is formed by the reaction during final annealing between an internal oxidation layer, which is mainly composed of silica developed under appropriate conditions during decarburization annealing, and MgO contained in an annealing separator. In the above experiments, the steel sheet surface is uniformly cleaned before decarburization annealing under the acid concentration conditions where the film adhesion is good, which may have accelerated the development of an internal oxidation layer during decarburization annealing. Further, it is believed that the Fe ions function as a catalyst to accelerate the cleaning of the steel sheet surface by the acid. That is, when there are few Fe ions, the reactivity between the steel sheet surface and the acid in the acid solution is low, and the surface cleaning is considered to be insufficient. When there are too many Fe ions, the pickling effect is reduced, and the cleaning is considered to be insufficient as well.

Furthermore, it is considered that the decarburization reaction is suppressed when the CO concentration in the furnace is high. That is, the C in steel reacts with water vapor in a wet atmosphere and is released into the atmosphere as CO and CO₂. A high CO concentration in the furnace suppresses the aforementioned reaction and increases the C content in steel in a finally obtained grain-oriented electrical steel sheet. Since there is a close relationship between decarburization and the development of an internal oxidation layer, it is assumed that if decarburization is insufficient, an ideal internal oxidation layer cannot be obtained, resulting in deterioration of film adhesion.

The present disclosure is based on the above findings, and the primary features thereof are as follows.
[1] A method of manufacturing a grain-oriented electrical steel sheet, comprising
   subjecting a steel slab for grain-oriented electrical steel sheet to hot rolling to obtain a hot-rolled steel sheet,
   subjecting the hot-rolled steel sheet to cold rolling once, or twice or more with intermediate annealing performed therebetween, to obtain a cold-rolled steel sheet,
   subjecting the cold-rolled steel sheet to pickling,
   subjecting the cold-rolled steel sheet to decarburization annealing,
   applying an annealing separator containing MgO to a surface of the cold-rolled steel sheet after the decarburization annealing, and
   subjecting the cold-rolled steel sheet applied with the annealing separator to final annealing, wherein
   in the pickling, a solution with an acid concentration of 1.0 mass% or more and 20 mass% or less and an Fe ion concentration of 2 mass% or more and 15 mass% or less is used, and
   in the decarburization annealing, a concentration of CO inevitably mixed in an atmosphere gas is maintained at 6 vol% or less.
[2] The method of manufacturing a grain-oriented electrical steel sheet according to aspect [1], wherein an acid contained in the solution used in the pickling is at least one selected from the group consisting of phosphoric acid, hydrochloric acid, sulfuric acid, and nitric acid.

### (Advantageous Effect)

According to the present disclosure, it is possible to obtain a grain-oriented electrical steel sheet with excellent film adhesion.

### BRIEF DESCRIPTION OF THE DRAWINGS

In the accompanying drawings:
FIG. 1 is a graph illustrating the relationship between the Fe ion concentration and the film adhesion;
FIG. 2 is a graph illustrating the relationship between the acid concentration and the film adhesion; and
FIG. 3 is a graph illustrating the relationship between the CO concentration in a furnace, and the film adhesion and the C content in steel.

### DETAILED DESCRIPTION

The following describes examples of embodiments the present disclosure in detail. The following provides a description of some of the embodiments of the present disclosure, by way of example only, and the present disclosure is by no means limited to the following embodiments.

### [Steel slab for grain-oriented electrical steel sheet]

In the present disclosure, a steel slab for grain-oriented electrical steel sheet (hereinafter may be simply referred to as "steel slab") is used as a starting material. The steel slab may be a steel slab of any chemical composition without particular limitation.

The steel slab preferably contains the following components. In the following descriptions of chemical composition, "%" refers to "mass%" and "ppm" refers to "mass ppm", respectively, unless otherwise specified.

### C: 0.01 % or more and 0.10 % or less

When the C content is more than 0.10 %, it is difficult to reduce the C content in steel to 0.0035 % or less, where magnetic aging does not occur, even if decarburization annealing is performed. Therefore, the C content is preferably 0.10 % or less. The C content is more preferably 0.06 % or less. On the other hand, when the C content is less than 0.01 %, the grain boundary strengthening effect of C is lost, and defects such as cracks occur in the steel slab, which may hinder the operability. Therefore, the C content is preferably 0.01 % or more. The C content is more preferably 0.03 % or more.

### Si: 2.0 % or more and 5.0 % or less

Si is an effective element for increasing the specific resistance of steel and improving the iron loss properties. When the Si content is less than 2.0 %, the effect is insufficient. Therefore, the Si content is preferably 2.0 % or more. The Si content is more preferably 3.0 % or more. On the other hand, when the Si content exceeds 5.0 %, the workability of the steel deteriorates, which renders rolling difficult. Therefore, the Si content is preferably 5.0 % or less. The Si content is more preferably 3.6 % or less.

### Mn: 0.01 % or more and 0.50 % or less

Mn is an effective element for improving hot workability. When the Mn content is less than 0.01 %, the effect is insufficient. Therefore, the Mn content is preferably 0.01 % or more. The Mn content is more preferably 0.03 % or more. On the other hand, when the Mn content exceeds 0.50 %, the magnetic flux density of the grain-oriented electrical steel sheet decreases. Therefore, the Mn content is preferably 0.50 % or less. The Mn content is more preferably 0.15 % or less.

In a case of using either or both of MnS and MnSe as inhibitors, the chemical composition of the steel slab may further contain either or both of S and Se in a total amount of 0.005 % or more and 0.10 % or less.

In a case of using AlN as an inhibitor, the chemical composition of the steel slab may further contain Al: 0.01 % or more and 0.04 % or less, and N: 0.003 % or more and 0.012 % or less.

On the other hand, in a case of using no inhibitor, it is possible to reduce the contents of Al, N, S, and Se as much as possible and to cause secondary recrystallization of the Goss orientation by the texture inhibition effect. Therefore, it is preferable to reduce the contents of Al, N, S, and Se in the chemical composition of the steel slab to the following ranges.
Al: 0.010 % or less,
N: 0.0060 % or less, and
S and Se: 0.010 % or less in total

From the viewpoint of the texture inhibition effect, the contents of these elements are preferably as low as possible. Therefore, the lower limit of the contents of these elements may be 0 %.

The contents of Al, N, S, and Se are more preferably in the following ranges.
Al: 0 % or more and 0.008 % or less,
N: 0 % or more and 0.0050 % or less, and
S and Se: 0 % or more and less than 0.005 % in total

In one embodiment of the present disclosure, a steel slab having a chemical composition containing
C: 0.01 % to 0.10 %,
Si: 2.0 % to 5.0 %,
Mn: 0.01 % to 0.50 %,
Al: 0 % to 0.04 %,
N: 0 % to 0.012 %, and
S and Se: 0 % to 0.10 % in total,
with the balance being Fe and inevitable impurities, may be used.

The chemical composition may further optionally contain at least one selected from the group consisting of
Ni: 0 % to 1.50 %,
Cr: 0 % to 0.50 %,
Cu: 0 % to 0.50 %,
P: 0 % to 0.50 %,
Sb: 0 % to 0.50 %,
Sn: 0 % to 0.50 %,
Bi: 0 % to 0.50 %,
Mo: 0 % to 0.50 %,
B: 0 ppm to 25 ppm,
Nb: 0 % to 0.020 %,
V: 0 % to 0.010 %,
Zr: 0 % to 0.10 %,
Co: 0 % to 0.050 %,
Pb: 0 % to 0.0100 %,
As: 0 % to 0.0200 %,
Zn: 0 % to 0.020 %,
W: 0 % to 0.0100 %,
Ge: 0 % to 0.0050 %, and
Ga: 0 % to 0.0050 %.
The addition of these elements can further improve the magnetic properties. However, if the content exceeds the upper limit, the development of secondary recrystallized grains is suppressed, which, on the contrary, deteriorates the magnetic properties.

Since the above elements are optionally added elements, the lower limit of the content is set to 0 %. However, from the viewpoint of increasing the effect of adding these elements, it is preferable to set the content of each of the elements equal to or higher than the following lower limit.
Ni: 0.01 %,
Cr: 0.01 %,
Cu: 0.01 %,
P: 0.005 %,
Sb: 0.005 %,
Sn: 0.005 %,
Bi: 0.005 %,
Mo: 0.005 %,
B: 2 ppm,
Nb: 0.001 %,
V: 0.001 %,
Zr: 0.001 %,
Co: 0.002 %,
Pb: 0.0001 %,
As: 0.0010 %,
Zn: 0.001 %,
W: 0.0010 %,
Ge: 0.0001 %, and
Ga: 0.0001 %.

The method of manufacturing the steel slab is not particularly limited, and the steel slab may be manufactured with any method. For example, the steel slab can be manufactured by ingot casting or continuous casting using molten steel whose chemical composition has been adjusted to a predetermined chemical composition. It is also possible to manufacture a thin slab or thinner cast steel with a thickness of 100 mm or less by direct casting, and the thin slab or thinner cast steel can then be used as the steel slab.

### [Hot rolling]

Next, the steel slab is subjected to hot rolling to obtain a hot-rolled steel sheet. The steel slab may be heated prior to the hot rolling, or the steel slab may be rolled immediately after the steel slab is obtained by casting without reheating. The slab heating temperature before hot rolling is not particularly limited, but it is preferably 1100 °C to 1460 °C. Especially when the steel slab does not contain any inhibitor component, the slab heating temperature is preferably 1300 °C or lower from the viewpoint of cost. When an inhibitor component is contained, the slab heating temperature is preferably 1300 °C or higher to completely dissolve the inhibitor component.

The hot rolling can be performed under any conditions. From the viewpoint of controlling the microstructure of the hot-rolled steel sheet, it is preferable to perform at least one pass of rough rolling at 900 °C or higher and 1200 °C or lower and then perform at least two passes of finish rolling at 700 °C or higher and 1000 °C or lower during the hot rolling.

After the hot rolling, the obtained hot-rolled steel sheet may be coiled into a coil shape. From the viewpoint of both of control of carbide structure and prevention of defects such as cracks, the coiling temperature is preferably 400 °C or higher during the coiling. The coiling temperature is preferably 750 °C or lower. The coiling temperature is more preferably 500 °C or higher. The coiling temperature is more preferably 700 °C or lower.

Further, it is preferable to subject the obtained hot-rolled steel sheet to hot-rolled sheet annealing. By performing hot-rolled sheet annealing, it is possible to make the microstructure of the steel sheet uniform and reduce variations in the magnetic properties of the finally obtained grain-oriented electrical steel sheet. From the viewpoint of microstructure uniformity, the annealing temperature is preferably 800 °C or higher during the hot-rolled sheet annealing. The annealing temperature is preferably 1250 °C or lower. The annealing temperature is more preferably 900 °C or higher. The annealing temperature is more preferably 1150 °C or lower. Similarly, from the viewpoint of microstructure uniformity, it is preferable to hold the steel sheet at that temperature after heating the steel sheet to the heating temperature during the hot-rolled sheet annealing. During the holding, the holding time is preferably 5 seconds or longer. The holding time is more preferably 10 seconds or longer. The holding time is more preferably 180 seconds or shorter. After holding the steel sheet at that temperature, the steel sheet may be cooled. From the viewpoint of morphological control of a second phase and precipitates, the cooling rate in a temperature range of 800 °C to 350 °C is preferably 5 °C/s or higher. The cooling rate is preferably 100 °C/s or lower. The cooling rate is more preferably 15 °C/s or higher. The cooling rate is more preferably 45 °C/s or lower.

Next, it is preferable to descale the hot-rolled steel sheet to remove the scale formed on the surface of the steel sheet during hot rolling. The method of descaling is not particularly limited, and any method may be used. Examples thereof include a method using heated acid and a method of mechanically removing scale.

### [Cold rolling]

Next, the hot-rolled steel sheet is subjected to cold rolling once, or twice or more with intermediate annealing performed therebetween, to obtain a cold-rolled steel sheet. The cold rolling can be performed under any conditions.

During the cold rolling, it is preferable to use lubricant such as rolling oil to reduce the rolling load and improve the rolling shape. From the viewpoint of obtaining a good recrystallized texture before secondary recrystallization, the total rolling reduction in the last cold rolling of the cold rolling process (hereinafter referred to as "final cold rolling") is preferably 50 % or more. The total rolling reduction is preferably 92 % or less.

In the case of performing intermediate annealing, it is preferable to hold the steel sheet in a temperature range of 900 °C or higher and 1250 °C or lower for at least 5 seconds during the intermediate annealing, from the viewpoint of microstructure control. From the viewpoint of morphological control of a second phase and precipitates, the cooling rate from 900 °C to 350 °C is preferably 5 °C/s or higher during cooling after the holding. The cooling rate is preferably 100 °C/s or lower. The cooling rate is more preferably 15 °C/s or higher. The cooling rate is more preferably 45 °C/s or lower.

The rolled steel sheet may be coated with rolling oil. Therefore, in the case of performing intermediate annealing, it is preferable to perform degreasing prior to the intermediate annealing to remove the rolling oil. After the intermediate annealing, it is preferable to perform descaling to remove the scale formed on the surface of the steel sheet. The method of descaling is not particularly limited, and any method may be used. Examples thereof include a method using heated acid and a method of mechanically removing scale.

It is preferable to subject the obtained cold-rolled steel sheet to degreasing prior to the subsequent pickling.

### [Pickling]

In the present disclosure, it is important to subject the cold-rolled steel sheet to pickling using a solution with an acid concentration of 1.0 % or more and 20 % or less and an Fe ion concentration of 2 % or more and 15 % or less. As described above, excellent film adhesion can be obtained by performing pickling under the above conditions.

### [Decarburization annealing]

Next, the cold-rolled steel sheet after the pickling is subjected to decarburization annealing. The decarburization annealing can be performed under any conditions. In the decarburization annealing, it is preferable to hold the steel sheet in a temperature range of 750 °C or higher and 950 °C or lower for at least 10 seconds, and it is more preferable to hold the steel sheet in a temperature range of 800 °C or higher and 900 °C or lower for at least 10 seconds. The decarburization annealing is preferably performed in a wet atmosphere containing H₂ and N₂. In part or all of the decarburization annealing, the dew point of the wet atmosphere is preferably 20 °C or higher. The dew point is preferably 80 °C or lower. The dew point is more preferably 40 °C or higher. The dew point is more preferably 70 °C or lower. In the decarburization annealing, CO is inevitably mixed in the atmosphere gas, but the CO concentration in the furnace needs to be 6 % or less for the reason described above. By controlling the CO concentration in the furnace to 6 % or less, excellent film adhesion can be obtained, and the C content in steel can be reduced to 35 ppm or less. Therefore, the concentration of CO inevitably mixed in the atmosphere gas is maintained at 6 vol % or less in the decarburization annealing.

### [Application of annealing separator]

Next, an annealing separator containing MgO is applied to the surface of the cold-rolled steel sheet after the decarburization annealing. The annealing separator is preferably an annealing separator containing MgO as a main component. The content of MgO in the annealing separator is preferably 60 mass% or more.

Although the application of the annealing separator is not particularly limited, it is generally preferable to apply it to both surfaces of the cold-rolled steel sheet. The amount of the annealing separator applied to each surface is preferably 2.5 g/m² or more.

The annealing separator may be applied with a wet method or a dry method. When it is applied with a wet method, for example, a slurry containing MgO can be applied. When it is applied with a dry method, for example, the annealing separator can be applied by electrostatic coating. When applying the slurry, it is preferable to set the slurry temperature at a constant temperature of 5 °C or higher and 30 °C or lower to suppress an increase in viscosity. To obtain a uniform slurry concentration, it is preferable to prepare the slurry in a tank for blending and then offer the slurry for application from a tank separate from the tank for blending.

### [Final annealing]

Next, the cold-rolled steel sheet applied with the annealing separator is subjected to final annealing to develop secondary recrystallized grains and form a forsterite film. The final annealing can be performed under any conditions.

The final annealing is typically performed with the cold-rolled steel sheet, on which the annealing separator has been applied, coiled. Since the final annealing generally takes a long time, it is preferable to upend the coil during the annealing. As used herein, the "upend" means that the central axis of the coil is made in the vertical direction. Further, it is preferable to wind a band or the like around the coil to prevent the coil from unwinding during the annealing.

From the viewpoint of completing the secondary recrystallization, the annealing temperature in the final annealing is preferably 800 °C or higher. Further, from the viewpoint of sufficient formation of forsterite film, the annealing temperature is preferably 1050 °C or higher. On the other hand, the upper limit of the annealing temperature in the final annealing is not particularly limited. However, the annealing temperature is preferably 1300 °C or lower from the viewpoint of preventing coil buckling.

The final annealing can also serve as purification annealing to remove inhibitor-forming elements and other substances from the steel. To remove the inhibitor-forming elements and reduce iron loss, it is preferable to hold the steel sheet at an annealing temperature of 1050 °C or higher and 1300 °C or lower for at least 3 hours. In this case, it is preferable to introduce an atmosphere containing H₂ in part or all of the temperature range of 1050 °C or higher.

After the final annealing, it is preferable to remove the annealing separator remaining on the surface of the steel sheet. The annealing separator can be removed by, for example, water washing, brushing, or pickling.

From the viewpoint of further reducing iron loss, it is preferable to further subject the grain-oriented electrical steel sheet to flattening annealing after the final annealing.

Since grain-oriented electrical steel sheets are often used in a laminated state, it is preferable to form an insulating coating on the surface of the grain-oriented electrical steel sheet to ensure insulation. Any coating with insulating properties can be used as the insulating coating. From the viewpoint of further reducing iron loss, the insulating coating is preferably a tension coating capable of imparting tension to the steel sheet.

The method of forming the insulating coating is not particularly limited, and any method may be used. Generally, an insulating coating can be formed by applying a coating solution to the surface of the grain-oriented electrical steel sheet and baking it. The coating solution may be applied before flattening annealing and baked by flattening annealing. From the viewpoint of improving the adhesion of the insulating coating and further reducing iron loss, the insulating coating may be provided via a binder. From the same point of view, it is also possible to vapor-deposit an inorganic material on the surface layer of the steel sheet with a physical vapor deposition method or a chemical vapor deposition method to form an insulating coating.

### EXAMPLES

### (Example 1)

A grain-oriented electrical steel sheet having a forsterite film and an insulating coating on its surface was manufactured by the following procedure.

First, a steel slab for grain-oriented electrical steel sheet containing, in mass%, 0.056 % of C, 3.24 % of Si, and 0.07 % of Mn was heated to 1400 °C and subjected to hot rolling to obtain a hot-rolled steel sheet with a thickness of 2.3 mm. After subjecting the hot-rolled steel sheet to hot-rolled sheet annealing at 1025 °C for 60 seconds, pickling was performed to remove scale on the steel sheet surface.

Next, the hot-rolled steel sheet after the pickling was subjected to first cold rolling to obtain a thickness of 1.6 mm, and it was subjected to intermediate annealing at 1050 °C for 100 seconds and then to second cold rolling to obtain a cold-rolled steel sheet with a thickness of 0.23 mm.

The cold-rolled steel sheet was subjected to pickling in a hydrochloric acid solution at a temperature of 60 °C. The acid concentration and the Fe ion concentration in the hydrochloric acid solution were as listed in Table 1. The acid concentration and the Fe ion concentration were measured using an ultrasonic concentration measuring instrument manufactured by Fuji Kogyo. The Fe ions in the hydrochloric acid solution were added as iron(III) chloride hexahydrate. When the hydrochloric acid solution is used for the pickling, the Fe ion concentration increases because of the elution of iron from the cold-rolled steel sheet. Therefore, the Fe ion concentration in the hydrochloric acid solution was monitored using the aforementioned ultrasonic concentration measuring instrument, and an aqueous hydrochloric acid solution was added to keep the Fe ion concentration constant.

Next, the cold-rolled steel sheet after the pickling was subjected to decarburization annealing under conditions of 860 °C × 120 seconds, 50 % H₂ + 50 % N₂, and a dew point of 60 °C. In this case, the CO concentration in the annealing furnace was controlled to the value listed in Table 1.

After the decarburization annealing, the surface of the steel sheet was applied with an annealing separator mainly composed of MgO, and the steel sheet was subjected to final annealing at 1220 °C for 10 hours in a H₂ atmosphere to form a forsterite film on the surface of the steel sheet. Next, after removing the unreacted annealing separator remaining on the surface of the steel sheet by water washing, a coating solution mainly composed of phosphate was applied. The steel sheet applied with the coating solution was subjected to flattening annealing, which served both for coating baking and flattening of the steel sheet, to form an insulating coating on the surface of the steel sheet. The annealing temperature in the flattening annealing was 780 °C, and the annealing time was 30 seconds.

### (Film adhesion)

The film adhesion of the obtained grain-oriented electrical steel sheet was evaluated. The film adhesion was evaluated by winding the grain-oriented electrical steel sheet around cylinders of various diameters and determining the minimum diameter at which the film would not peel off. The smaller the minimum diameter is, the better the film adhesion is.

### (C content in steel)

The C content in steel was measured for the obtained grain-oriented electrical steel sheet. The C content in steel was measured after removing the film on the surface of the grain-oriented electrical steel sheet by pickling with hydrochloric acid of 5 % concentration at 90 °C.

### (Iron loss)

The iron loss of the obtained grain-oriented electrical steel sheet was measured with a method in accordance with JIS C2550-1 (2011).

The measurement results are listed in Table 1. The results listed in Table 1 indicate that according to the method of the present disclosure, it is possible to obtain a grain-oriented electrical steel sheet with excellent film adhesion and iron loss properties, and a C content in steel that does not cause magnetic aging.

### [Table 1]

**Table 1**

| No. | Pickling | | Decarburization annealing | Evaluation results | | | Remarks |
|---|---|---|---|---|---|---|---|
| | Acid concentration (mass%) | Fe ion concentration (mass%) | CO concentration (vol%) | Minimum diameter (mm) | C content in steel (mass ppm) | Iron loss (W/kg) | |
| 1 | **0.5** | 5 | 3 | 50 | 38 | 0.854 | **Comparative Example** |
| 2 | 1.0 | 5 | 3 | 25 | 25 | 0.849 | Example |
| 3 | 5.0 | **1** | 3 | 45 | 28 | 0.879 | **Comparative Example** |
| 4 | 5.0 | 5 | 3 | 25 | 20 | 0.846 | Example |
| 5 | 5.0 | 5 | **8** | 25 | 40 | 0.842 | **Comparative Example** |
| 6 | 5.0 | 10 | 3 | 25 | 24 | 0.85 | Example |
| 7 | 5.0 | 10 | **8** | 25 | 42 | 0.88 | **Comparative Example** |
| 8 | 5.0 | **18** | 3 | 35 | 30 | 0.84 | **Comparative Example** |
| 9 | 10 | **1** | 3 | 40 | 31 | 0.883 | **Comparative Example** |
| 10 | 10 | 5 | 3 | 20 | 15 | 0.863 | Example |
| 11 | 10 | 5 | **8** | 25 | 46 | 0.831 | **Comparative Example** |
| 12 | 10 | 10 | 3 | 20 | 18 | 0.831 | Example |
| 13 | 10 | 10 | **8** | 20 | 45 | 0.866 | **Comparative Example** |
| 14 | 10 | 15 | **3** | 25 | 28 | 0.842 | Example |
| 15 | 10 | **18** | 3 | 45 | 27 | 0.861 | **Comparative Example** |
| 16 | 15 | **1** | 3 | 45 | 39 | 0.851 | **Comparative Example** |
| 17 | 15 | 5 | 3 | 20 | 14 | 0.837 | Example |
| 18 | 15 | 5 | **8** | 20 | 50 | 0.873 | **Comparative Example** |
| 19 | 15 | 10 | 3 | 20 | 16 | 0.874 | Example |
| 20 | 15 | 10 | **8** | 20 | 43 | 0.884 | **Comparative Example** |
| 21 | 15 | 15 | 3 | 25 | 22 | 0.846 | Example |
| 22 | 15 | **18** | 3 | 50 | 28 | 0.852 | **Comparative Example** |
| 23 | 20 | **1** | 3 | 45 | 37 | 0.835 | **Comparative Example** |
| 24 | 20 | 5 | 3 | 25 | 19 | 0.825 | Example |
| 25 | 20 | 5 | **8** | 25 | 55 | 0.869 | **Comparative Example** |
| 26 | 20 | 10 | 3 | 25 | 20 | 0.856 | Example |
| 27 | 20 | 10 | **8** | 25 | 60 | 0.877 | **Comparative Example** |
| 28 | 20 | **18** | 3 | 50 | 40 | 0.826 | **Comparative Example** |
| 29 | **25** | **1** | 3 | 55 | 50 | 0.848 | **Comparative Example** |
| 30 | **25** | 5 | 3 | 35 | 28 | 0.879 | **Comparative Example** |
| 31 | **25** | 5 | **8** | 35 | 60 | 0.848 | **Comparative Example** |
| 32 | **25** | 10 | 3 | 35 | 30 | 0.879 | **Comparative Example** |
| 33 | **25** | 10 | **8** | 35 | 65 | 0.878 | **Comparative Example** |
| 34 | **25** | **18** | 3 | 55 | 50 | 0.853 | **Comparative Example** |

### (Example 2)

A steel slab for grain-oriented electrical steel sheet containing, in mass%, 0.049 % of C, 3.11 % of Si, 0.10 % of Mn, 0.015 % of Se, and 0.15 % of Sb was heated to 1400 °C and subjected to hot rolling to obtain a hot-rolled steel sheet with a thickness of 2.6 mm. Next, pickling was performed to remove scale on the surface of the hot-rolled steel sheet.

Next, the hot-rolled steel sheet after the pickling was subjected to first cold rolling to obtain a thickness of 0.58 mm, and it was subjected to intermediate annealing at 1000 °C for 30 seconds and then to second cold rolling to obtain a cold-rolled steel sheet with a thickness of 0.23 mm.

Next, the cold-rolled steel sheet was subjected to pickling. An acid solution of the type and the acid concentration listed in Table 2 was used for the pickling. The temperature of the acid solution was 75 °C, and the Fe ion concentration was 3 %. The acid concentration and the Fe ion concentration were measured using an ultrasonic concentration measuring instrument manufactured by Fuji Kogyo. Other conditions for the pickling were the same as in Example 1 above.

Next, decarburization annealing was performed under conditions of 840 °C × 120 seconds, 50 % H₂ + 50 % N₂, and a dew point of 60 °C. In this case, the CO concentration in the annealing furnace was controlled to be 5.0 %.

After the decarburization annealing, the surface of the steel sheet was applied with an annealing separator mainly composed of MgO, and the steel sheet was subjected to final annealing at 1200 °C for 10 hours in a H₂ atmosphere. Next, after removing the unreacted annealing separator remaining on the surface of the steel sheet by water washing, a coating solution mainly composed of phosphate was applied, and the steel sheet was subjected to flattening annealing to bake the coating and flatten the steel sheet. The annealing temperature in the flattening annealing was 840 °C, and the annealing time was 60 seconds.

The film adhesion, C content in steel, and iron loss of the obtained grain-oriented electrical steel sheet were evaluated in the same manner as in Example 1 above. The obtained results are also listed in Table 2. The results listed in Table 2 indicate that according to the method of the present disclosure, it is possible to obtain a grain-oriented electrical steel sheet with excellent film adhesion and iron loss properties, and a C content in steel that does not cause magnetic aging.

### [Table 2]

**Table 2**

| No. | Pickling | | Evaluation results | | | Remarks |
|---|---|---|---|---|---|---|
| | Type of acid | Acid concentration (mass%) | Minimum diameter (mm) | C content in steel (mass ppm) | Iron loss (W/kg) | |
| 35 | Hydrochloric acid | **0.3** | 50 | 30 | 0.84 | **Comparative Example** |
| 36 | Hydrochloric acid | 10 | 20 | 16 | 0.857 | Example |
| 37 | Hydrochloric acid | 15 | 20 | 22 | 0.867 | Example |
| 38 | Hydrochloric acid | **30** | 35 | 15 | 0.843 | **Comparative Example** |
| 39 | Phosphoric acid | **0.3** | 50 | 41 | 0.826 | **Comparative Example** |
| 40 | Phosphoric acid | 10 | 25 | 22 | 0.865 | Example |
| 41 | Phosphoric acid | 15 | 20 | 22 | 0.851 | Example |
| 42 | Phosphoric acid | **30** | 35 | 23 | 0.871 | **Comparative Example** |
| 43 | Sulfuric acid | **0.3** | 50 | 30 | 0.836 | **Comparative Example** |
| 44 | Sulfuric acid | 10 | 25 | 27 | 0.873 | Example |
| 45 | Sulfuric acid | 15 | 25 | 18 | 0.877 | Example |
| 46 | Sulfuric acid | **30** | 35 | 26 | 0.851 | **Comparative Example** |
| 47 | Nitric acid | **0.3** | 50 | 29 | 0.869 | **Comparative Example** |
| 48 | Nitric acid | 10 | 25 | 33 | 0.838 | Example |
| 49 | Nitric acid | 15 | 20 | 14 | 0.831 | Example |
| 50 | Nitric acid | **30** | 35 | 25 | 0.843 | **Comparative Example** |

## Claims

1. A method of manufacturing a grain-oriented electrical steel sheet, comprising
subjecting a steel slab for grain-oriented electrical steel sheet to hot rolling to obtain a hot-rolled steel sheet,
subjecting the hot-rolled steel sheet to cold rolling once, or twice or more with intermediate annealing performed therebetween, to obtain a cold-rolled steel sheet,
subjecting the cold-rolled steel sheet to pickling,
subjecting the cold-rolled steel sheet to decarburization annealing,
applying an annealing separator containing MgO to a surface of the cold-rolled steel sheet after the decarburization annealing, and
subjecting the cold-rolled steel sheet applied with the annealing separator to final annealing, wherein
in the pickling, a solution with an acid concentration of 1.0 mass% or more and 20 mass% or less and an Fe ion concentration of 2 mass% or more and 15 mass% or less is used, and
in the decarburization annealing, a concentration of CO inevitably mixed in an atmosphere gas is maintained at 6 vol% or less.

2. The method of manufacturing a grain-oriented electrical steel sheet according to claim 1, wherein an acid contained in the solution used in the pickling is at least one selected from the group consisting of phosphoric acid, hydrochloric acid, sulfuric acid, and nitric acid.
